# EUROPEAN PATENT APPLICATION

(11) **EP 3 109 531 A1**
(43) Date of publication of application: **28.12.2016**
(21) Application number: 15173844.0
(22) Date of filing: 25.06.2015
(51) Int. Cl.: F16L 3/20, B63B 25/28, F03D 1/00

(54) **MONOPILE FASTENING DEVICE AND SYSTEM, A VESSEL AND A METHOD**

(71) Applicant: Conbit Engineering B.V., 5626 DK Eindhoven (NL)
(72) Inventor: DE FOUW, Jacob Pieter, 5626 DK EINDHOVEN (NL)
(74) Representative: Algemeen Octrooi- en Merkenbureau B.V.

(57) **Abstract**

Monopile fastening device for retaining an elongated monopile during sea transport, said device comprising a supporting frame for fixation of the monopile fastening device to a deck of a vessel, at least two supporting elements, arranged at a distance from each other, wherein each of the supporting elements are connected, via a first end thereof, to said supporting frame, wherein each supporting element is provided, at a second end thereof, with at least one contact element arranged for being in contact with said elongated monopile, wherein each of the at least two supporting elements are pivotally connected to said supporting frame around a pivoting axis, said pivoting axis being oriented along a longitudinal axis of said elongated monopile, when being retained by said device, such that said sea fastening is suitable for retaining monopiles having a variety of diameters.

## Description

According to a first aspect the invention relates to a monopile fastening device for retaining an elongated monopile during sea transport and/or quay transport.

The invention relates according to a second aspect of the invention to a monopile fastening system comprising a plurality of monopile fastening devices according to the first aspect of the invention, and a vessel, a barge or a transport unit comprising a monopile fastening device according to the first aspect or a monopile fastening system according to the second aspect.

According to a further aspect, the invention relates to a method for fastening a monopile using a monopile fastening device according to the first aspect of the present invention.

A known monopile fastening device for retaining an elongated monopile, such as a monopile for supporting a wind turbine on a seabed, comprises a rigid support element having a support surface on which the monopile is retained during transport. The support surface is curved with a radius which approximately equals the radius of the monopile at the specific support position. A drawback of this known monopile fastening device is the limited flexibility with respect to the reusability of the device. Typically, the device is fixed to the deck of a vessel, for example welded, and once a monopile retained by the device has been transported to its drop off location at sea, the monopile fastening device is no longer of use. The device is then to be freed from the deck, for example cut and/or grinded, and the monopile fastening device is de-assembled. As such, the known monopile fastening device is used only once during transport of a specific monopile, or a serie of specific monopiles.

An objective of the present invention is therefore to provide a monopile fastening device with an improved flexibility with respect to the re-usability of the device.

In a first aspect of the invention, there is provided a monopile fastening device for retaining an elongated monopile during sea transport and/or quay transport, said device comprising:
- a supporting frame for fixation of the monopile fastening device to a surface of a vessel, a barge or a transport unit;
- at least two supporting elements, arranged at a distance from each other, wherein each of the supporting elements are connected, via a first end thereof, to said supporting frame, wherein each supporting element is provided, at a second end thereof, with at least one contact element arranged for being in contact with said elongated monopile;
wherein each of the at least two supporting elements are pivotally connected to said supporting frame around a pivoting axis, said pivoting axis being oriented along a longitudinal axis of said elongated monopile, when being retained by said device, such that said monopile fastening device is suitable for retaining monopiles having a variety of diameters.

It was an insight of the inventor that the re-usability of the monopile fastening device is improved in case the device is suitable for retaining monopiles having different diameters. Typically, for a single project, the monopiles have a same diameter. However, monopiles having another diameter may be used in the same or in another project. In case the monopile fastening device is suitable for retaining monopiles having different diameters, the device may be deployed in several, different types of projects.

This device is suitable for retaining monopiles having different monopiles due to the provision of said pivoting axis. By pivoting the supporting elements around the pivoting axis, a variety of monopiles having diferent diameters can be retained. Hereto, the supporting elements will be pivoted away from each other to a specific position to retain a monopile having a relative large diameter at a supporting position, and pivot the supporting elements towards each other to a specific position to retain a monopile having a relative small diameter, at the supporting position.

In accordance with the present invention, a monopile is considered a single, generally large-diameter, foundation structural element to support the loads, weight, wind, etc., of a large above-sea surface structure such as an off-shore wind turbine.

In order to retain a single monopile during transport thereof, at least two monopile fastening devices are required, one towards each end of the monopile. In case additional support is required, additional sea fastening devices may be deployed, for example in between the two devices.

Typically, the diameter of the monopiles vary from about 3.0 meter to about 10 meter, with a maximum weight of approximately 1850 metric Ton. The length of a monopile is typically between 35 - 85 meters. As such, the distance at which the at least two supporting element are arranged from each other is also about 5.0 meter to about 10 meter.

Another advantage of the present invention is that the monopile fastening device reduces the time required for loading and unloading of the monopiles. Due to the large range of monopile diameters the device is able to retain, no separate saddles are needed anymore to hold the monopile at its place. Further, it is not necessary to fixate the monopile itself to the monopile fastening device, for example using a welding process, to make sure that the monopile is firmly retained by the device.

In accordance with the present invention, the securing of the monopile, i.e. the retaining thereof, is obtained by the friction between the monopile and the at least one contact element provided on each of the at least two supporting elements. As such, the weight of the monopile is one of the main reasons that the monopile is securely retained by each of the supporting elements, via the at least one contact element thereof.

Optionally, lashing means can be secured over a retained monopile for providing additional support.

The supporting frame, or base frame, is arranged to carry the weight of a monopile, and to transfer the weight thereof to the surface of a vessel, a barge or a transport unit. In order to fixate the supporting frame, for example, to the deck, shear keys may be used in longitudinal and transverse direction. These shear keys, also known as pitch and roll stoppers, do not need to be welded to the supporting frame, but only to the deck of the vessel. Optionally, shear keys are integrated into the supporting frame. By means of two-way hydraulic or pneumatic cylinders, these shear keys can be extended or retracted to enable a quick aligning, position locking and releasing. The optional shear keys are useful in case skidding is required.

In accordance with the present invention, the supporting frame is arranged for fixation of the monopile fastening device to a surface of a vessel, a transport unit or a barge or the like. A barge, for example, is a flat-bottomed boat, built mainly for river and canal transport of heavy goods such as monopiles. Some barges are not self-propelled and need to be towed or pushed by towboats. A specific type of barge, i.e. a jack-up barge is a self-elevating unit, which is a type of mobile platform that may comprise of a buoyant hull fitted with a number of movable legs, capable of raising its hull over the surface of the sea.

A transport unit is, for example, a self-propelled modular transporter or sometimes self-propelled modular trailer, SPMT, which is a platform vehicle with a large array of wheels. SPMT's are typically used for transporting massive objects such as monopoles, large bridge sections, oil refining equipment, motors and other objects that are too big or heavy for trucks. A typical SPMT can have a grid of several dozen computer-controlled wheels, all individually controllable, in order to evenly distribute weight and steer accurately. Each individual wheel can swivel independently from the others to allow it to turn, move sideways or even spin in place. Some SPMTs allow the wheels to telescope independently of each other so that the load can be kept flat and evenly distributed while moving over uneven terrain.

In accordance with the present invention, quay transport may be accomplished by an SPMT in which the monopile is transported to the vessel and, subsequently, loaded from the SPMT onto the vessel.

In an example, the device further comprises:
- at least two support element setting means which are operatively connected to the supporting frame and to said at least two supporting elements, respectively, for setting a pivoting angle between a respective supporting element and the supporting frame.

Here, the at least two supporting element are positioned using the at least two support element setting means, for example one-way hydraulic or pneumatic cylinders, to accommodate the range of monopile diameters. Accumulators may be provided to ensure that the hydraulic cylinders act like a spring to avoid any excessive stresses. As soon as the monopile is placed upon the monopile fastening device, i.e. it is retained by the device, the at least two support element setting means are relieved, as they do not need to remain active for retaining the monopile. The monopile is retained by its weight, and the friction provided between the contact elements and the monopile.

In case no monopile is placed on top of the monopile fastening device, the at least two support element setting means are also relieved, or deactivated, and may be secured by for example mechanical locking to avoid rocking of the supporting elements due to vessel motions during sea transport.

In another example, the supporting frame comprises leveling pads for leveling and/or shimming each of said at least two supporting elements separately.

In a further example, each of said contact elements are pivotally connected to said respective supporting element around a pivoting axis, said pivoting axis being oriented along a longitudinal axis of said elongated monopile, when being retained by said device.

In an example, each supporting element comprises:
- at least one contact element setting means which are operatively connected to said supporting element and to said contact element for setting a pivoting angle between said supporting element and said contact element.

The contact element setting means may be arranged to set an initial angle between the supporting element and the contact element in accordance with the diameter of the monopile to be retained. As such, the initial position of the monopile fastening device, more specifically the angular position of the contact element with respect to the supporting element may be set in accordance with the expected diameter of the monopile.

As mentioned above, any of the setting means are not intended for capturing, holding or retaining a monopile. The setting means may be used to initially set the fastening device to an expected size or diameter of the monopile.

In yet another example, said contact elements comprise contact pads, wherein said contact pads are provided with a friction surface for providing frictional contact with said monopile, when being retained.

In order to improve the retaining of the monopile, the inventor found that contact pads may be provided on the contact elements, wherein the contact pads comprise a frictional surface for providing a frictional contact between the monopile and the contact elements.

A plurality of contact pads may be provided per contact element. This is advantageous as in such a case the contact pads may be replaced or refurbished separately, thereby decreasing the maintenance requirements of the monopile fastening device.

Due to wearing or overstressing some of the contact pads surfaces rubber pads may need replacing. In case of leakage of any hydraulic component, the specific component may need to be replaced or serviced. To have any redundancy, the power pack of any other monopile fastening device can temporarily be used by rerouting it and connecting it to the defect monopile fastening device. Also a manual powered hydraulic pump can be used to make any adjustments to the position of any hydraulic component in case the power pack fails. This is only applicable for the unloading sequence to get the sea fastening in the unused transportation storage position.

Maintenance consist of a daily visual check of the structures integrity. Hinges and pins between the rotating components need lubrication on a scheduled basis. The supporting frame, supporting element, contact pads and alignment tools can be lifted separately by use of lifting provisions provided thereon.

In an even further example, said contact elements comprise contact bodies are provided with said contact pads, wherein each of said contact bodies are pivotally connected to a respective contact element around a pivoting axis, said pivoting axis being oriented along a longitudinal axis of said elongated monopile, when being retained by said device.

The advantage of this example is that the contact pads can be pivoted with respect to its contact element, such the surface of the contact pad can be place or oriented against the monopile.

Each contact element may further comprise:
- at least one contact body setting means which are operatively connected to said contact body and to said contact element for setting a pivoting angle between said contact body and said contact element.

In another example, said device comprises alignment tools for alignment of said monopile fastening device with respect to a monopile to be retained.

The alignment tools may be provided on said contact elements, wherein said alignment tools are arranged to be actuated by said monopile during placement thereof on said device.

As such, by placing the monopile on top of the alignment tools, the contact elements are pivoted around the pivoting axis to face the monopile.

These alignment units may be attached to the side of the contact elements. They ensure a smooth introduction of the monopile, from hanging 'loose' in the crane and first contact to the monopile until the full support by the contact pad. They guarantee minimal misalignment of the contact pads to ensure a proper load introduction and distribution to the at least two supporting elements and the supporting frame.

In an example, the current estimated allowable misalignment, measured from the center of the supporting elements and seen from top view, is approximately ±500mm from the ideal path. Up to such a misalignment the monopile will still be placed properly in the supporting elements.

A small, low friction contact pad is initially extended above and at the edge of the contact pads by means of, for example, one-way or two-way hydraulic cylinders. These cylinders are combined with an accumulator or overpressure valves and a power pack, ensuring that the low friction contact pad will not be damaged during first contact with the monopile when it is loaded. It produces enough force to tilt the contact pad in the correct orientation for the proper alignment. The accumulator is controlled on the other side by a valve which is activated to release pressure. This is performed as soon as the monopile is completely lowered onto the contact pads. In this way, maximum friction between the monopile and the contact pads is achieved since no lifting force is than present anymore.

The alternative for the hydraulic spring is a mechanical spring, combined with a mechanical crank set to reduce the lifting force when the monopile is in its final position, i.e. retained position. An advantage of this system is the limited required maintenance and chance of failure and the relative low cost compared to the hydraulic aligning.

According to the present invention, any of the setting means as described above may comprise a hydraulic or a pneumatic cylinder,

In a second aspect of the invention, there is provided a monopile fastening system comprising a plurality of monopile fastening devices according to any of the examples as provided above, wherein the monopile fastening devices are stacked upon each other.

In order to accomplish this, a monopile fastening device may comprise a stacking support frame for stacking a first monopile fastening device above another monopile fastening device.

In a third aspect of the invention, there is provided a vessel comprising a monopile fastening device according to any of the examples as provided above.

In a fourth aspect of the invention, there is provided a method for fastening a monopile using a monopile fastening devices according to any of examples as provided above, wherein said method comprises:
- providing a vessel;
- fixating said monopile fastening devices to said deck of said vessel;
- providing said monopile on said monopile fastening devices, via said contact elements;
- allowing said monopile fastening devices to retain said monopile.

In an example hereof, the method further comprises the steps of:
- setting said any of said setting means before providing said monopile on said monopile fastening devices, and
- actively releasing said setting means when said monopile is retained by said monopile fastening devices.

In a further example, the method comprises the steps of:
- setting said any of said setting means;
- lifting said retained monopile from said fastening devices.

Typically, during the method, the at least two supporting elements, and the contact pads may be positioned, so their geometry complies with, or is in accordance with, the monopile diameter of the monopile to be retained. The monopile may then be placed upon the monopile fastening device using an appropriate crane. Just before contact with the monopile fastening device, the levelness and alignment is verified to be within allowable limits. The monopile is subsequently lowered until contact with the alignment tools is established. Here, no contact pad surfaces should make contact with the monopile before the alignment tools do. When the alignment tools make contact with the monopile, the monopile can be lowered until it makes contact with the contact pads. Slowly, the monopile is to be completely released by the crane. Finally, each of the setting means may be deactived once the monopile is retained by the monopile fastening device.

In an example of the method, it further comprises the steps of:
Skidding the monopile fastening devices over the surface for aligning the monopile fastening devices with the monopile to be provided.

In accordance with the present invention, skidding implies that the monopile fastening devices can be shoved, slided, pushed along the surface of the vessel, transport unit or barge, such that the monopile can be aligned with a crane, for example.

The above-mentioned and other features and advantages of the invention will be best understood from the following description referring to the attached drawings. In the drawings, like reference numerals denote identical parts or parts performing an identical or comparable function or operation, wherein:
- Figure 1 is a schematic view of a typical prior art monopile fastening device;
- Figure 2 is a schematic front view of a monopile fastening device according to the present invention;
- Figure 3 is a schematic plan view of a monopile fastening device shown in figure 2;
- Figure 4 is a schematic front view of a monopile fastening device according to the present invention;
- Figure 5 is a schematic plan view of a monopile fastening device shown in figure 4;
- Figure 6 is as schematic view of a monopile fastening device according to the present invention retaining an elongated monopile.

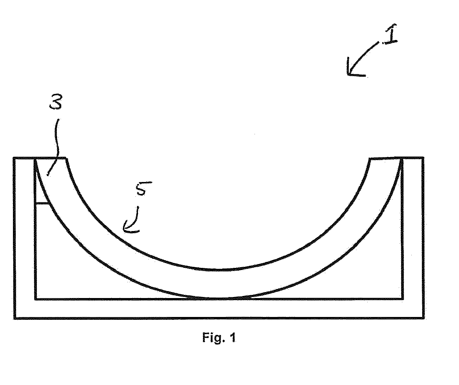

A known monopile fastening device 1 for retaining an elongated monopile, such as a monopile for supporting a wind turbine on a seabed, is shown in figure 1. The device 1 comprises a rigid support element 3 having a support surface 5 on which the monopile is retained during transport. The support surface 5 is curved with a radius which substantially equals the radius of the monopile at the specific support position.

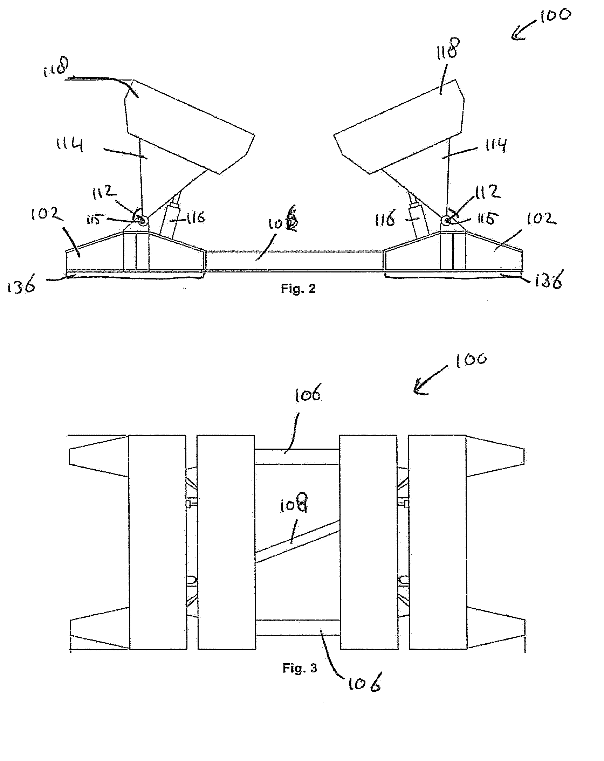

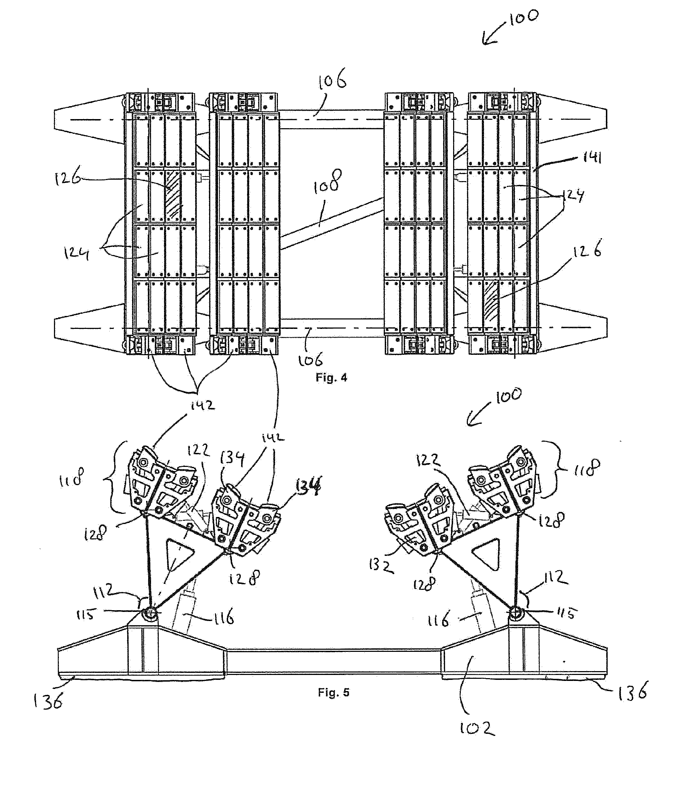

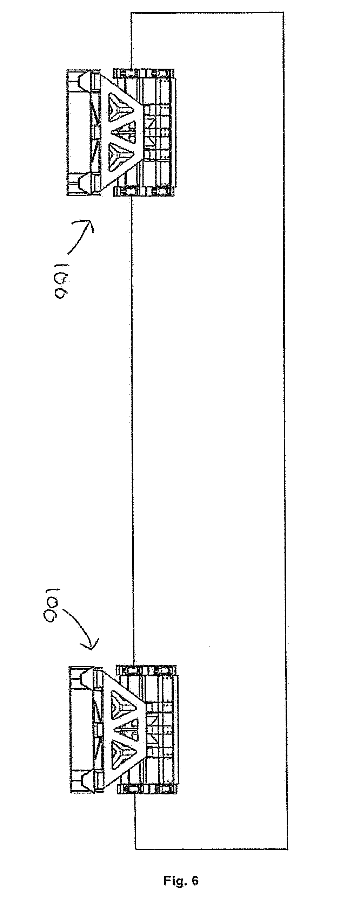

The monopile fastening device 100 according to the present invention shown in figures 2 - 6 comprises a supporting frame 102 which is to be fastened to a deck of a vessel. The supporting frame 102 comprises two parallel beams 106 which are connected via two cross members 104. The two cross members are spaced apart from each other and connected substantially perpendicular to the beams 106. In addition, the supporting frame 102 comprises a diagonal bar 108 for increasing the rotational rigidity of the supporting frame 102. The length of the beams 106 and supporting frame 102 shown in figure 3 is approximately 9 meters. The width of the supporting frame 102 is approximately 4 meters. The supporting frame is welded up of steel plates with a thickness ranging from 10 to 60 mm and has an approximate weight of 12.5 metric Ton.

The supporting frame 102 is on the upper side thereof provided with connection means 112 for pivotally, or rotatably, connecting at least two supporting elements 114 with a first side thereof with the supporting frame 102. The connection means comprises a swivel axis 115 which axis 115 is oriented along a longitudinal axis of said elongated monopile, when being retained by the device 100.

The advantage hereof is that the monopile fastening device 100 is suitable for retaining monopoles having a variety of diameter.

The supporting elements 114 extend from the supporting frame 102 along a length of approximately 1.5 meter and are substantially fabricated from welded steel plates having a thickness ranging from 10 to 60 mm. A supporting element 114 has an approximate weight of 3 metric Ton. The supporting frame 102 comprises leveling pads 136 for leveling and/or shimming each of said at least two supporting elements 114 separately.

The supporting elements 114 are further operatively connected to the supporting frame 102 via support element setting means 116 for setting a pivoting angle A1 between a respective supporting element 114 and the supporting frame 102. The support element setting means 116 consist of hydraulic cylinders which in an active mode can change the pivoting angle A1 by letting hydraulic fluid in or out the cylinder or lock the pivoting angle A1 by blocking flow of hydraulic fluid. In an inactive mode, the pivot angle A1 can be varied freely. Each supporting element 114 is provided, at a second end thereof, with at least one contact element 118 arranged for being in contact with said elongated monopile. Each contact element 118 is pivotally connected to a supporting element 114 around a pivoting axis 128. This latter pivoting axis 128 is oriented along a longitudinal axis of said elongated monopile, when being retained by said device 100.

The contact element 118 is further operatively connected to the supporting element 114 via contact element setting means 122 for setting a pivoting angle between a respective supporting element 114 and the contact element 118. The contact element setting means 122 consist of hydraulic cylinders which in an active mode can change the pivoting angle A2 by letting hydraulic fluid in or out the cylinder or lock the pivoting angle A2 by blocking flow of hydraulic fluid. In an inactive mode, the pivot angle A2 can be varied freely.

Each contact element 118 is provided with contact pads 124. The contact pads are provided with a friction surface 126 made up of a rubber or other material that has a relative high frictional resistance in combination with steel. The friction surface is provided for providing frictional contact with said monopile, when being retained. The contact pads 124 are provided on contact bodies 141. These contact bodies 141 are pivotally connected to a respective contact element 118 around a pivoting axis 130. Pivoting axis 130 is oriented along a longitudinal axis of said elongated monopile, when being retained by said device.

The contact element 118 is further provided with at least one contact body setting means 132. The at least one contact body setting means 132 is operatively connected to a contact body 141 and a contact element 118 for setting a pivoting angle between a contact body 141 and a contact element 118. The contact body setting means 132 consist of hydraulic cylinders which in an active mode can change the pivoting angle by letting hydraulic fluid in or out the cylinder or lock the pivoting angle by blocking flow of hydraulic fluid. In an inactive mode, the pivot angle can be varied freely.

The device 100 further comprises alignment tools 134 for alignment of the supporting elements 114 and/or the contact element 118 with respect to a monopile. The alignment tools 134 are provided on the contact elements 118 and are arranged to be actuated by said monopile during placement thereof on the device 100.

The alignment tools 134 may be provided with low friction contact pads 142, such that a monopile is able to move, or slide along the pads 142 during placement of the monopile on the device 100.

Using device 100 fastened to the deck of a vessel, a monopile can be fastened for transport by providing the monopile on the friction surface 126 of the contact pads 124 of the monopile fastening device 100. Before the monopile is provided on the device, the setting means 116, 122, 132 are set by bringing the hydraulic cylinders in the active mode. When the monopile contacts the alignment tools 134, the device 100, more specifically the supporting elements 114 and/or the contact element 118, will be aligned with respect to the monopile. Upon contact of the monopile with the friction surface 126, the hydraulic cylinders of the setting means 116, 122, 132 are brought in the inactive mode. Due to the weight of the monopile, the movement of the pivoting axis 115, 128, 130 is prevented and a reliable way of fastening the monopile is realized.

When the device 100 no longer needs to retain the monopile, the setting means 116, 122, 132 will be brought back in the active mode or locking mode. By bringing the setting means 116, 122, 132 in the active or locked mode, it is avoided that the monopile fastening device 100 collapses on, for example, the supporting frame 102 or the vessel.

## Claims

1. Monopile fastening device for retaining an elongated monopile during sea transport and/or quay transport, said device comprising:
- a supporting frame for fixation of the monopile fastening device to a surface of a vessel, a barge or a transport unit;
- at least two supporting elements, arranged at a distance from each other, wherein each of the supporting elements are connected, via a first end thereof, to said supporting frame, wherein each supporting element is provided, at a second end thereof, with at least one contact element arranged for being in contact with said elongated monopile;
wherein each of the at least two supporting elements are pivotally connected to said supporting frame around a pivoting axis, said pivoting axis being oriented along a longitudinal axis of said elongated monopile, when being retained by said device, such that said monopile fastening device is suitable for retaining monopiles having a variety of diameters.

2. Monopile fastening device according to claim 1, wherein said device further comprises:
- at least two support element setting means which are operatively connected to the supporting frame and to said at least two supporting elements, respectively, for setting a pivoting angle between a respective supporting element and the supporting frame.

3. Monopile fastening device according to any of the previous claims, wherein said supporting frame comprises leveling pads for leveling and/or shimming each of said at least two supporting elements separately.

4. Monopile fastening device according to any of the previous claims, wherein each of said contact elements are pivotally connected to said respective supporting element around a pivoting axis, said pivoting axis being oriented along a longitudinal axis of said elongated monopile, when being retained by said device.

5. Monopile fastening device according to claim 4, wherein each supporting element comprises:
- at least one contact element setting means which are operatively connected to said supporting element and to said contact element for setting a pivoting angle between said supporting element and said contact element.

6. Monopile fastening device according to any of the previous claims, wherein said contact elements comprise contact pads, wherein said contact pads are provided with a friction surface for providing frictional contact with said monopile, when being retained.

7. Monopile fastening device according to any of the previous claims, wherein said contact elements comprise contact bodies provided with said contact pads, wherein each of said contact bodies are pivotally connected to a respective contact element around a pivoting axis, said pivoting axis being oriented along a longitudinal axis of said elongated monopile, when being retained by said device.

8. Monopile fastening device according to claim 7, wherein each contact element comprises:
- at least one contact body setting means which are operatively connected to said contact body and to said contact element for setting a pivoting angle between said contact body and said contact element.

9. Monopile fastening device according to any of the previous claims, wherein said device comprises alignment tools for alignment of said monopile fastening device with respect to a monopile to be retained.

10. Monopile fastening device according to claim 9, wherein said alignment tools are provided on said contact elements, wherein said alignment tools are arranged to be actuated by said monopile during placement thereof on said device.

11. Vessel, barge or transport unit comprising a monopile fastening device according to any of the claims 1 - 10 or a monopile fastening system according to claim 12.

12. Method for fastening a monopile using monopile fastening devices according to any of the claims 1 - 10, wherein said method comprises:
- providing a vessel, barge or transport unit;
- fixating said monopile fastening devices to said deck of said vessel;
- providing said monopile on said monopile fastening devices, via said contact elements;
- allowing said monopile fastening devices to retain said monopile.

13. Method for fastening a monopile according to claim 12, wherein said monopile fastening devices comprise any of the setting means according to any of the claims 2, 5 or 8, said method further comprises the steps of:
- setting said any of said setting means before providing said monopile on said monopile fastening devices, and
- actively releasing said setting means when said monopile is retained by said monopile fastening devices.

14. Method for fastening a monopile according to claim 13, said method further comprising the steps of:
- setting said any of said setting means;
- lifting said retained monopile from said fastening devices.

15. Method for fastening a monopile according to any of the claims 12 - 14, wherein said method further comprises the step of:
- skidding said monopile fastening devices over said surface for aligning said monopile fastening devices with said monopile to be provided.
